# EUROPÄISCHE PATENTSCHRIFT

(11) **EP 2 014 952 B1**
(45) Veröffentlichungstag und Bekanntmachung des Hinweises auf die Patenterteilung: **27.07.2011**
(21) Anmeldenummer: 08159322.0
(22) Anmeldetag: 30.06.2008
(51) Int. Cl.: F16H 45/02

(54) **Hydrodynamische Kopplungsanordnung**
Hydrodynamic coupling device
Agencement d'accouplement hydrodynamique

(30) Priorität: 13.07.2007 DE 102007032693
(43) Veröffentlichungstag der Anmeldung: 14.01.2009
(73) Patentinhaber: ZF Friedrichshafen AG, 88038 Friedrichshafen (DE)
(72) Erfinder: Dr. Sasse, Christoph, 97422, Schweinfurt (DE)

(56) Entgegenhaltungen:
- EP-A- 1 895 195
- EP-A- 1 983 221
- DE-A1- 4 423 640
- DE-A1- 10 358 902
- DE-C1- 3 222 119
- US-A- 5 655 368

## Beschreibung

Die Erfindung betrifft eine hydrodynamische Kopplungsanordnung gemäß dem Oberbegriff des Anspruches 1, wie sie aus der US 56 55 368 bekannt ist.

Eine weitere hydrodynamische Kopplungsanordnung, aus der DE 103 58 902 A1 bekannt, dient zur Herstellung oder zur Aufhebung einer Wirkverbindung zwischen einem Antrieb, wie der Kurbelwelle einer Brennkraftmaschine, und einem Abtrieb, wie einer Getriebeeingangswelle, und ist mit einem um eine Drehachse rotierbaren Kupplungsgehäuse versehen. In der DE 103 58 902 A1 ist die Kopplungsanordnung als hydrodynamischer Drehmomentwandler ausgebildet, in welchem ein hydrodynamischer Kreis mit einem Pumpenrad, einem Turbinenrad und einem Leitrad vorgesehen ist. Darüber hinaus ist die hydrodynamische Kopplungsanordnung mit einer Überbrückungskupplung versehen, durch welche der hydrodynamische Kreis bei Momentenübertragungen vom Antrieb zum Abtrieb umgangen werden kann, wobei der Überbrückungskupplung ein Torsionsschwingungsdämpfer mit zwei Umfangsfedersätzen zur Dämpfung von Torsionsschwingungen zugeordnet ist.

Der in der DE 103 58 902 A1 gezeigte hydrodynamische Drehmomentwandler veranschaulicht eine bei hydrodynamischen Kopplungsanordnungen in jüngster Zeit häufig angewandte Entwicklungstendenz, wonach ein von Pumpen-, Turbinen-, und Leitrad umschlossener Torusraum zugunsten eines kompakten Bauraums der Kopplungsanordnung über begrenzte Abmessungen verfügt. Gleichzeitig erfordern eine große Dimensionierung der Überbrückungskupplung zur Übertragung hoher Drehmomente sowie ein leistungsfähiger und daher komplexer Torsionsschwingungsdämpfer erheblichen Bauraum in der Kopplungsanordnung.

Während längerer Stillstandszeiten eines die hydrodynamische Kopplungsanordnung aufnehmenden Kraftfahrzeugs verlässt ein nicht unerheblicher Teil des im Kupplungsgehäuse enthaltenen fluidförmigen Mediums das Kupplungsgehäuse, um in das zugeordnete Getriebe abzufließen. Wird daraufhin ein Neustart eingeleitet, verteilt sich das im Kupplungsgehäuse verbliebende, fluidförmige Medium zunächst fliehkraftbedingt innerhalb des Kupplungsgehäuses, so dass lediglich ein Teil dieses Mediums in den Torusraum gelangt, und dort zur Momentenübertragung verfügbar ist. Dieses Problem wird durch Einlegen der Stufe Drive (D) im Getriebe weiter verstärkt, da hierdurch der Antrieb zunächst mit vorbestimmter Drehzahl wirksam ist, der Abtrieb und somit der Torsionsschwingungsdämpfer dagegen zumindest im wesentlichen noch im Stillstand verharren, was trotz anliegender Fliehkraft zu einem Absaugen von fluidförmigem Medium durch den Torsionsschwingungsdämpfer nach radial innen führt Dies muss durch aus dem Torusraum nachgesaugtes fluidförmiges Medium ausgeglichen werden. Zwar wird während dieses Betriebszustandes aus einer Fluidbevorratung frisches fluidförmiges Medium über die geöffnete Überbrückungskupplung in das Kupplungsgehäuse eingeleitet, jedoch gelangt auch dieses Medium zunächst nicht in den Torusraum, sondern wird vielmehr ebenfalls nach radial innen abgesaugt. Diese Bedingungen äußern sich beim Anfahren des Fahrzeuges in einer Weise, dass der zumindest weitgehend entleerte Torusraum kaum zur Übertragung des vom Antrieb eingeleiteten Drehmomentes auf den Abtrieb befähigt ist. Einzig an der Überbrückungskupplung anliegende Schleppmomente vermögen eine Übertragung eines Restdrehmomentes sicher zu stellen. Erst mit langsam zunehmender, weiterer Befüllung des Kupplungsraums beginnt ein Übertritt frischen fluidförmigen Mediums in den Toruskreis und damit eine Befüllung desselben. Eine derartige Leistungscharakteristik ist bei einem modernen Kraftfahrzeug nicht tolerierbar.

Der Erfindung liegt die Aufgabe zugrunde, eine hydrodynamische Kopplungsanordnung derart auszubilden, dass bei einem Neustart eines Kraftfahrzeuges auch nach Ablauf einer Mindeststillstandszeit eine hinreichende Drehmomentenübertragbarkeit sicher gestellt ist.

Diese Aufgabe wird durch die im Anspruch 1 angegebenen Merkmale gelöst.

Durch Ausbildung zumindest eines im Kupplungsgehäuse der hydrodynamischen Kopplungsanordnung ohnehin vorhandenen Freiraumes zur Aufnahme einer Beschaufelung wird dafür gesorgt, dass sich in diesem Freiraum insbesondere während eines Anfahrvorganges nach einem länger andauernden Stillstand des Kraftfahrzeuges kein ungenutzter Flüssigkeitsring ausbilden kann, der für die Übertragung eines Drehmomentes beitragslos bleiben würde, das durch einen Antrieb, wie beispielsweise eine Brennkraftmaschine, auf das Kupplungsgehäuse einwirkt, und auf einen Abtrieb, wie beispielsweise eine Getriebeeingangswelle der hydrodynamischen Kopplungsanordnung, übertragen werden soll.

Mit besonderem Vorzug ist hierbei ein Freiraum beispielsweise in einem Abschnitt des Kupplungsgehäuses zwischen einer Überbrückungskupplung und einem Torsionsschwingungsdämpfer vorgesehen, und zwar an der der Überbrückungskupplung zugewandten Seite des Torsionsschwingungsdämpfers. Die Beschaufelung dieses ersten Freiraumes ist an dem Kupplungsgehäuse vorgesehen, und rotiert daher mit der Drehzahl des Antriebs um eine Drehachse der hydrodynamischen Kopplungsanordnung. Dieser Freiraum ist vorzugsweise zumindest in Richtung zum Torsionsschwingungsdämpfer mit einer Ausnehmung versehen, über welche er zum Austausch fluidförmigen Mediums mit dem Torsionsschwingungsdämpfer befähigt ist. Ergänzend kann der Freiraum aber auch zur Überbrückungskupplung hin geöffnet sein, so dass er fluidförmiges Medium aufnehmen kann, das über die Überbrückungskupplung frisch zugeführt wird. Des weiteren kann die Beschaufelung des Freiraumes alternativ oder ergänzend fluidförmiges Medium aufnehmen, das von einem durch zumindest ein Pumpenrad und wenigstens ein Turbinenrad gebildeten hydrodynamischen Kreis stammt, und diesen vorzugsweise über einen Axialspalt zwischen Pumpenrad und Turbinenrad in Richtung zur Beschaufelung des ersten Freiraumes verlässt.

Nach Anspruch 1 ist der Torsionsschwingungsdämpfer mit einer Führungsvorrichtung ausgebildet, die zur Abstützung wenigstens eines Energiespeichers einer Dämpfungseinrichtung nach radial außen dient. Diese Führungsvorrichtung verfügt über zumindest eine Führungsschale für den wenigstens einen Energiespeicher, wobei die Führungsschale mit besonderem Vorzug an ihrer dem Freiraum zugewandten Seite zumindest im wesentlichen mit einer Öffnung zum Eintritt von aus dem Freiraum stammendem fluidförmigem Medium versehen ist. Auf diese Weise ist der Freiraum als Antriebsteil eines hydrodynamischen Zusatzkreises wirksam, die Führungsschale des Torsionsschwingungsdämpfers dagegen als Abtriebsteil dieses hydrodynamischen Zusatzkreises, wobei in diesem Zusammenhang die Windungen des zumindest einen Energiespeichers im Sinne einer Beschaufelung des Abtriebsteils dienen. Der Freiraum wirkt demnach zusammen mit der darin angeordneten Beschaufelung als Pumpe im hydrodynamischen Zusatzkreis, der Torsionsschwingungsdämpfer mit der Führungsschale für den wenigstens einen Energiespeicher sowie mit den Windungen dieses Energiespeichers dagegen als Turbine. Die vorgenannte Pumpe bildet zusammen mit der ebenfalls vorgenannten Turbine eine zusätzliche Hydrokupplung. Diese Hydrokupplung trägt aufgrund ihrer Drehmomenten-Übertragungsfähigkeit in Umfangsrichtung zur Unterstützung des hydrodynamischen Kreises bei der Momentenübertragung zwischen dem Antrieb und dem Abtrieb bei.

Die Hydrokupplung fördert unter anderem im Freiraum enthaltenes fluidförmiges Medium nach radial außen, und erhöht durch die hierdurch erzeugte Saugwirkung nach radial innen ein Nachströmen viskosen Mediums aus diesem Bereich, der von einem externen Kreis versorgt wird. Dieses zusätzliche viskose Medium gelangt letztendlich in den hydrodynamischen Kreis, und vermag dort die Drehmomenten-Übertragungsfähigkeit zu verbessern. Durch diese Maßnahme wird das Anfahrverhalten des Kraftfahrzeuges insbesondere bei noch nicht vollständig befülltem hydrodynamischen Kreis unterstützt.

Zur Bildung des vorgenannten, hydrodynamischen Zusatzkreises ist der Torsionsschwingungsdämpfer vorteilhafterweise so ausgerichtet, dass die Öffnung in der Führungsschale der Führungsvorrichtung den bereits erwähnten Austausch fluidförmigen Mediums zwischen dem jeweiligen Freiraum und der Führungsschale des Torsionsschwingungsdämpfers ermöglicht. Die Öffnung der Führungsschale ist auf den Freiraum hin gerichtet, wenn dieser mit einer Beschaufelung befüllt ist.

Im Folgenden wird ein Ausführungsbeispiel für die Erfindung angegeben. Es zeigt im Einzelnen:

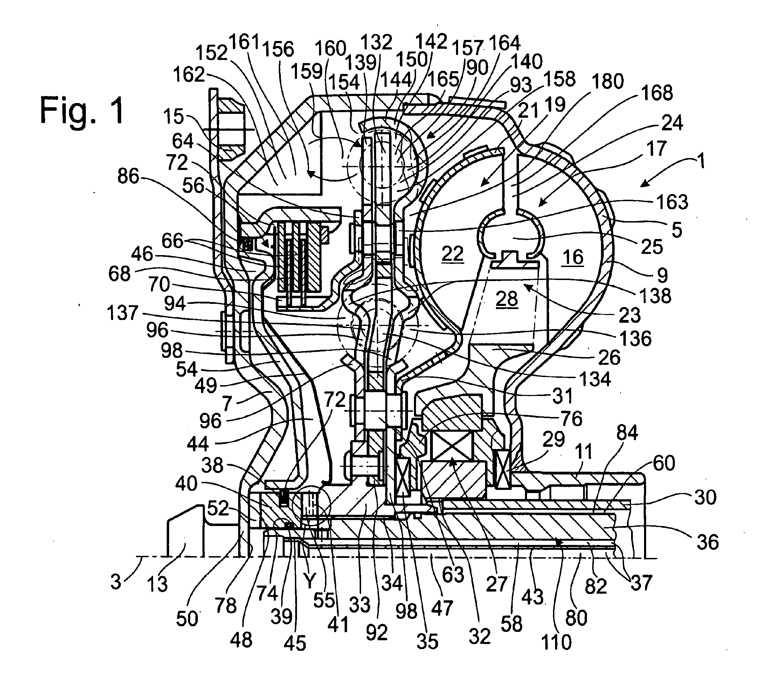

- Fig. 1: die obere Hälfte eines Längsschnittes durch ein einen hydrodynamischen Kreis enthaltendes Kupplungsgehäuse einer hydrodynamischen Kopplungsanordnung mit einem ersten hydrodynamischen Zusatzkreis zwischen einem ersten Freiraum des Kupplungsgehäuses und einem Torsionsschwingungsdämpfer,

In Fig. 1 ist eine hydrodynamische Kopplungsanordnung 1 dargestellt, ausgebildet als hydrodynamischer Drehmomentwandler. Die hydrodynamische Kopplungsanordnung 1 weist ein Kupplungsgehäuse 5 auf, das um eine Drehachse 3 Rotationsbewegungen auszuführen vermag. Das Kupplungsgehäuse 5 verfügt an seiner einem nicht gezeigten Antrieb, wie beispielsweise einer Kurbelwelle einer Brennkraftmaschine, zugewandten Seite über eine antriebsseitige Gehäusewandung 7, die mit einer Pumpenradschale 9 fest verbunden ist. Diese geht im radial inneren Bereich in eine Pumpenradnabe 11 über.

Zurückkommend auf die antriebsseitige Gehäusewandung 7, weist diese an ihrer dem nicht gezeigten Antrieb zugewandten Seite einen Lagerzapfen 13 auf, der in bekannter und daher nicht näher dargestellter Weise an einem Element des Antriebs, wie beispielsweise der Kurbelwelle, zur antriebsseitigen Aufnahme des Kupplungsgehäuses 5 vorgesehen ist. Weiterhin verfügt die antriebsseitige Gehäusewandung 7 über eine Befestigungsaufnahme 15, die üblicherweise zur Befestigung des Kupplungsgehäuses 5 am Antrieb dient, und zwar vorzugsweise über eine nicht gezeigte Flexplatte. Bezüglich einer zeichnerischen Darstellung der Aufnahme des Lagerzapfens eines hydrodynamischen Kopplungselementes in einer Kurbelwelle eines Antriebs sowie einer Anbindung des hydrodynamischen Kopplungselementes über eine Flexplatte an die Kurbelwelle wird beispielhaft auf die DE 32 22 119 C1, Fig. 1 verwiesen.

Die bereits erwähnte Pumpenradschale 9 bildet zusammen mit Pumpenradschaufeln 16 ein Pumpenrad 17, das mit einem eine Turbinenradschale 21 sowie Turbinenradschaufeln 22 aufweisenden Turbinenrad 19 sowie mit einem Leitrad 23 zusammenwirkt. Pumpenrad 17, Turbinenrad 19 und Leitrad 23 bilden in bekannter Weise einen hydrodynamischen Kreis 24, der einen Innentorus 25 umschließt.

Erwähnt werden sollte weiterhin, dass Leitradschaufeln 28 des Leitrades 23 auf einer Leitradnabe 26 vorgesehen sind, die auf einem Freilauf 27 angeordnet ist. Der Letztgenannte stützt sich über eine Axiallagerung 29 an der Pumpenradnabe 11 axial ab und steht über eine Verzahnung 32 in drehfester, aber axial relativ verschiebbarer Verbindung mit einer Stützwelle 30, die radial innerhalb der Pumpenradnabe 11 angeordnet ist. Die als Hohlwelle ausgebildete Stützwelle 30 ihrerseits umschließt eine als Abtrieb 110 der hydrodynamischen Kopplungsvorrichtung 1 dienende Getriebeeingangswelle 36, die mit einer Mittenbohrung 37 versehen ist. Diese Mittenbohrung 37 nimmt eine Hülse 43 auf, und zwar derart, dass die Hülse 43 mittels Abstützbereichen 45 radial in der Mittenbohrung 37 zentriert ist. Mit Axialversatz zu diesen Abstützbereichen 45 bildet die Hülse 43 radial zwischen sich und der umschließenden Wand der Mittenbohrung 37 einen ersten Versorgungskanal 58 für fluidförmiges Medium, nachfolgend als Strömungsmittel bezeichnet, aus, der bei der vorliegenden Auslegung der hydrodynamischen Kopplungsanordnung 1 als Zuführung für das Strömungsmittel wirksam ist. Radial innerhalb der Hülse 43 verbleibt ein zentraler Versorgungskanal 47.

Die Getriebeeingangswelle 36 nimmt über eine Verzahnung 34 eine Nabe 33 drehfest, aber axial verschiebbar auf, wobei diese Nabe 33 in einem radial äußeren Bereich zur Befestigung einer abtriebsseitigen Nabenscheibe 92 dient. Diese Nabenscheibe 92 wirkt über fingerförmig nach radial außen ragende Ansteuerelemente 134 auf Energiespeicher 136 eines radial inneren Umfangsfedersatzes 94, der sich anderenends an Ansteuerelementen 138 von Federfenstern 137 eines antriebsseitigen Deckbleches 96 sowie eines abtriebsseitigen Deckbleches 98 abstützt. Das Deckblech 98 dient zur Aufnahme eines Turbinenradfußes 31 mittels einer Nietverbindung 63.

Die Deckbleche 96 und 98 stehen außer mit dem radial inneren Umfangsfedersatz 94 auch mit einem radial äußeren Umfangsfedersatz 93 in Wirkverbindung, der ebenso wie der radial innere Umfangsfedersatz 94 Teil einer Dämpfungseinrichtung 180 des Torsionsschwinungsdämpfers 90 ist. Das antriebsseitige Deckblech 96 weist hierzu radial nach außen ragende, fingerförmige Ansteuerelemente 139 auf, während das abtriebsseitige Deckblech 98 über als Ansteuerelemente 140 wirksame Ausdrückungen verfügt. Die Ausformung der Ausdrückungen als Ansteuerelemente 140 ergibt sich durch die Gestaltung des abtriebsseitigen Deckbleches 98 im radial äußeren Bereich, in welchem das Deckblech 98 Energiespeicher 142 des Umfangsfedersatzes 93 entlang eines Teils des Umfangs der Energiespeicher 142 umgreift, und dadurch eine Führungsschale 144 für die Energiespeicher 142 bildet. Das antriebsseitige Deckblech 98 stützt durch Ausbildung als Führungsschale 144 die Energiespeicher 142 des radial äußeren Umfangsfedersatzes 93 unter drehzahlbedingter Fliehkraftwirkung nach radial außen ab, und bildet somit eine Führungsvorrichtung 150 des Torsionsschwingungsdämpfers 90 für diese Energiespeicher 142. Im Gegensatz dazu weist das abtriebsseitige Deckblech 98 an seiner einer Überbrückungskupplung 56 zugewandten Seite zumindest eine Öffnung 154 auf.

Die Führungsschale 144 des abtriebsseitigen Deckbleches 98 weist an ihrer der Überbrückungskupplung 56 zugewandten Seite eine Öffnung 152 auf. Benachbart zu dieser Öffnung 152, vorzugsweise radial außerhalb der Überbrückungskupplung 56, ist ein erster Freiraum 152 innerhalb des Kupplungsgehäuses 5 vorgesehen, wobei dieser Freiraum 152 eine am Kupplungsgehäuse 5 befestigte und daher mit Drehzahl des Kupplungsgehäuses 5 um die Drehachse 3 rotierende Beschaufelung 156 aufweist. Der Freiraum 152 weist auf jeden Fall an seiner dem Torsionsschwingungsdämpfer 90 zugewandten Seite eine Ausnehmung 159 auf, kann ergänzend aber auch, wie in Fig. 1 gezeigt, nach radial innen zur Überbrückungskupplung offen sein.

Bei Betrieb der hydrodynamischen Kopplungsanordnung 1 befüllt sich der Freiraum 152 mit fluidförmigem Medium, das aus dem hydrodynamischen Kreis 24 stammen kann, und dort über einen zwischen Pumpenrad 17 und Turbinenrad 19 verbleibenden Axialspalt 168 austritt, das ebenso aber auch von der Überbrückungskupplung 56 stammen kann, die zu Kühlungszwecken mit frischem fluidförmigem Medium versorgt werden kann. Dieses in den Freiraum 152 eingedrungene fluidförmige Medium wird durch die Beschaufelung 156 in Richtung zum Torsionsschwingungsdämpfer 90 geleitet, wo es durch die Öffnung 154 in den zumindest im wesentlichen durch die Führungsschale 144 der Führungsvorrichtung 150 umschlossenen Energiespeicherraum 157 eindringt. In diesem Energiespeicherraum 157 wirken Windungen 158 der Energiespeicher 142 in vergleichbarer Weise wie die Beschaufelung 156 des Freiraumes 152, und bewirken daher, zumindest im wesentlichen, eine Umlenkung des im Energiespeicherraum 157 enthaltenen viskosen Mediums in Richtung zum Freiraum 152. Dadurch entsteht ein erster hydrodynamischer Zusatzkreis 160, bei welchem der Freiraum 152 zusammen mit der Beschaufelung 156 als Antriebsteil 161, wirksam als Pumpe 162, und der Energiespeicherraum 157 zusammen mit den Windungen 158 der Energiespeicher 142 als Abtriebsteil 164, wirksam als Turbine 165 dient, wobei die Pumpe 162 und die Turbine 165 gemeinsam eine Zusatzhydrokupplung 166 bilden. In Fig. 1 ist dieser erste hydrodynamische Zusatzkreis 160 durch Pfeile symbolisch dargestellt.

Zurückkommend auf den radial äußeren Umfangsfedersatz 93, stützen sich dessen Energiespeicher 142 jeweils mit ihren von den Ansteuerelementen 139, 140 der Deckbleche 96, 98 abgewandten Seiten an einer antriebsseitigen Nabenscheibe 132 ab, welche zur Befestigung eines Innenlamellenträgers 64 der Überbrückungskupplung 56 vorgesehen ist.

Zur Begrenzung der Relativdrehauslenkweite zwischen der antriebsseitigen Nabenscheibe 132 des Torsionsschwingungsdämpfers 90 und den Deckblechen 96, 98 ist an dieser Nabenscheibe 132 eine Nietverbindung 163 befestigt, die Nietdurchgänge in den Deckblechen 96, 98 durchgreift, wobei sich diese Nietdurchgänge in Umfangsrichtung erstrecken. In vergleichbarer Weise wirkt die bereits erwähnte Vernietung 63 zwischen den Deckblechen 96, 98 und der abtriebsseitigen Nabenscheibe 92 des Torsionsschwingungsdämpfers 90.

Die Überbrückungskupplung 56 verfügt sowohl über innere Kupplungselemente 66, die über eine am Innenlamellenträger 64 vorgesehene Verzahnung 70 drehfest mit demselben sind, als auch über äußere Kupplungselemente 68, die mit den inneren Kupplungselementen 68 in Wirkverbindung bringbar sind, wobei die äußeren Kupplungselemente 68 mit einer Verzahnung 72 eines Außenlamellenträgers 69 in Wirkverbindung stehen, und über diesen Außenlamellenträger 69 mit der antriebsseitigen Wandung 7 des Kupplungsgehäuses 5 in Drehverbindung stehen. Die Überbrückungskupplung 56 ist mittels eines axial verlagerbaren Kolbens 54 ein- oder ausrückbar.

Wie Fig. 1 zeigt, kann zwischen dem Kolben 54 und dem Torsionsschwingungsdämpfer 90 eine Trennplatte 49 vorgesehen sein, die einen axial zwischen der Trennplatte 49 und dem Torsionsschwingungsdämpfer 90 liegenden Kupplungsraum 170 von einem axial durch den Kolben 54 und die Trennplatte 49 begrenzten Versorgungsraum 44 isoliert. An der von diesem Versorgungsraum 44 abgewandten Seite des Kolbens 54 ist, axial durch denselben sowie durch die antriebsseitige Gehäusewandung 7 begrenzt, ein Druckraum 46 vorgesehen. Der Kolben 54 ist im Kupplungsgehäuse 5 zentriert, und gegenüber demselben mittels einer Abdichtung 86 dichtend aufgenommen.

Die Nabe 33, die wegen der Aufnahme des Torsionsschwingungsdämpfers 90, sowie über denselben, mittelbar auch des Turbinenrades 19, nachfolgend als Trägernabe 33 bezeichnet ist, stützt sich einerseits über das Deckblech 98 und eine Lagerung 35, die als Axiallagerung ausgebildet ist, über eine Druckscheibe 76 am Freilauf 27 ab, und kann sich andererseits mit seinem der antriebsseitigen Wandung 7 zugewandten, einen Axiallagerungsbereich 48 bildenden Ende an einer Axialanlagefläche 50 der antriebsseitigen Gehäusewandung 7 axial abstützen, wobei sich diese Axialanlagefläche 50, ausgehend von der Drehachse 3 des Kupplungsgehäuses 5, nach radial außen erstreckt. Innerhalb des Erstreckungsbereiches dieser Axialanlagefläche 50 ist, ausgehend von der Gegenseite der antriebsseitigen Gehäusewandung 7 des Kupplungsgehäuses 5, der Lagerzapfen 13 befestigt.

Nach radial innen hin ist die Trägernabe 33 über eine in einer Dichtungsausnehmung 74 aufgenommenen Abdichtung 39 gegenüber der Getriebeeingangswelle 36 abgedichtet, nach radial außen durch eine in einer Dichtungsausnehmung 72 aufgenommenen Abdichtung 38 gegenüber dem Kolben 54 der Überbrückungskupplung 56. Durch diese beiden Abdichtungen 38, 39 werden Strömungsdurchlässe 52, welche die Trägernabe 33 an ihrem Axiallagerungsbereich 48 durchdringen, von anderen Strömungsdurchlässen 55, welche im axialen Erstreckungsbereich der Trägernabe 33 zwischen dem Kolben 54 und dem Torsionsschwingungsdämpfer 90 ausgebildet sind, getrennt. Die einen Strömungsdurchlässe 52 stehen mit dem zentralen Versorgungskanal 47 der Hülse 47, der als zentraler Strömungsweg 80 wirksam ist, in Strömungsverbindung, die anderen Strömungsdurchlässe 55 dagegen mit dem ersten Versorgungskanal 58 radial zwischen der Hülse 43 und der dieselbe umschließenden Wand der Mittenbohrung 37 der Getriebeeingangswelle 36, wobei dieser Versorgungskanal 58 als erster Strömungsweg 82 wirksam ist. Darüber hinaus ist ein zweiter Versorgungskanal 60 radial zwischen der Getriebeeingangswelle 36 und der Stützwelle 30 vorgesehen, der bei der vorliegenden Auslegung der hydrodynamischen Kopplungsanordnung 1 als Abführung für das Strömungsmittel wirksam ist, und als zweiter Strömungsweg 84 dient.

Der zentrale Strömungsweg 80 dient, über die Strömungsdurchlässe 52, zur Herstellung eines Überdruckes im Druckraum 46 gegenüber dem Versorgungsraum 44 und damit zur Druckbeaufschlagung des Kolbens 54 der Überbrückungskupplung 56 zum Einrücken, wodurch eine Reibverbindung zwischen den einzelnen Kupplungselementen 66, 68 hergestellt wird. Zur Erzeugung dieses Überdruckes im Druckraum 46 gegenüber dem Versorgungsraum 44 ist eine Verbindung des zentralen Strömungsweges 80 mit einer Steuervorrichtung und einem Hydraulikflüssigkeitsvorrat erforderlich. Weder die Steuervorrichtung noch der Hydraulikflüssigkeitsvorrat sind zeichnerisch dargestellt, können aber der Fig. 1 der DE 44 23 640 A1 entnommen werden.

Der erste Strömungsweg 82 dient, über die Verzahnung 34 und die Strömungsdurchlässe 55, zur Herstellung eines Überdruckes in dem Versorgungsraum 44 gegenüber dem Druckraum 46, und damit zur Druckbeaufschlagung des Kolbens 54 der Überbrückungskupplung 56 zum Ausrücken, wodurch die Reibverbindung zwischen den einzelnen Kupplungselementen 66, 68 gelöst wird. Zur Herstellung dieses Überdruckes im Versorgungsraum 44 gegenüber dem Druckraum 46 ist eine Verbindung des ersten Strömungsweges 82 mit der bereits erwähnten Steuervorrichtung und dem ebenfalls genannten Hydraulikflüssigkeitsvorrat erforderlich.

Fluidförmiges Medium, das über den ersten Strömungsweg 82 sowie die Strömungsdurchlässe 55 in den Versorgungsraum 44 gelangt ist, wird zur Kühlung der Kupplungselemente 66, 68 herangezogen. Nach Durchgang durch die Kupplungselemente 66, 68 strömt das fluidförmige Medium zum Torsionsschwingungsdämpfer 90 sowie zum ersten Freiraum 152.

### Bezugszeichenliste

- 1.: hydrodyn. Kopplungsvorrichtung
- 3.: Drehachse
- 5.: Kupplungsgehäuse
- 7.: antriebsseitige Gehäusewandung
- 9.: Pumpenradschale
- 11.: Pumpenradnabe
- 13.: Lagerzapfen
- 15.: Befestigungsaufnahme
- 16: Pumpenradschaufeln
- 17.: Pumpenrad
- 19.: Turbinenrad
- 21.: Turbinenradschale
- 22: Turbinenradschaufeln
- 23.: Leitrad
- 24.: hydrodynamischer Kreis
- 25.: Innentorus
- 26.: Leitradnabe
- 27.: Freilauf
- 28: Leitradschaufeln
- 29.: Axiallagerung
- 30.: Stützwelle
- 31.: Turbinenradfuss
- 32: Verzahnung
- 33.: Nabe
- 34: Verzahnung
- 35.: Axiallagerung
- 36.: Getriebeeingangswelle
- 37.: Mittenbohrung
- 38.: Abdichtung
- 39.: Abdichtung
- 43.: Hülse
- 44.: Versorgungsraum
- 45.: Abstützbereiche
- 46.: Druckraum
- 47.: zentraler Versorgungskanal
- 48.: Axiallagerungsbereich der Nabe
- 49.: Trennplatte
- 50.: Axialanlagefläche
- 52.: Strömungsdurchlässe
- 54.: Kolben
- 55.: Strömungsdurchlässe
- 56.: Überbrückungskupplung
- 58.: erster Versorgungskanal
- 60.: zweiter Versorgungskanal
- 63: Nietverbindung
- 64.: Innentamellenträger
- 66.: innere Kupplungselemente
- 68.: äußere Kupplungselemente
- 69.: Außenlamellenträger
- 70.: Verzahnung
- 72.: Dichtungsausnehmung
- 74.: Dichtungsausnehmung
- 76.: Druckscheibe
- 78.: Axialausnehmung
- 80.: zentraler Strömungsweg
- 82.: erster Strömungsweg
- 84.: zweiter Strömungsweg
- 85.: Nutungen
- 86.: Abdichtung
- 88.: Verzahnung
- 90.: Torsionsschwingungsdämpfer
- 92.: abtriebsseitige Nabenscheibe
- 93, 94: Umfangsfedersatz
- 96.: Deckblech
- 98.: Deckblech
- 110.: Abtrieb
- 132.: abtriebsseitige Nabenscheibe
- 134.: Ansteuerelement
- 136.: Energiespeicher
- 138.: Ansteuerelement
- 139.: Ansteuerelement
- 140.: Ansteuerelement
- 142.: Energiespeicher
- 144.: Führungsschale
- 150.: Führungsvorrichtung
- 152.: erster Freiraum
- 154.: Öffnung
- 156.: Beschaufelung
- 157.: Energiespeicherraum
- 158.: Windungen
- 159.: Ausnehmung
- 160.: erster hydrodynam. Zusatzkreis
- 161.: Antriebsteil
- 162.: Pumpe
- 163.: Nietverbindung
- 164.: Abtriebsteil
- 165.: Turbine
- 166.: Zusatzhydrokupplung
- 168.: Axialspalt
- 170.: Kupplungsraum
- 180.: Dämpfungseinrichtung
- 182.:
- 184.:
- 186.:
- 188.:
- 190.:
- 192.:
- 194.:
- 195.:

## Patentansprüche

1. Hydrodynamische Kopplungsanordnung mit einem um eine Drehachse (3) drehbaren Kupplungsgehäuse (5), innerhalb welchem zumindest ein durch wenigstens ein Pumpenrad (17) und ein Turbinenrad (19) gebildeter hydrodynamischer Kreis (24) vorgesehen ist, dem eine Überbrückungskupplung (56) sowie ein Torsionsschwingungsdämpfer (90) zugeordnet ist, wobei das Kupplungsgehäuse (5) bevorzugt im radial äußeren Bereich Freiräume (152) umfasst, die durch keines der vorgenannten Bauteile - Pumpenrad (17), Turbinenrad (19), Überbrückungskupplung (56) oder Torsionsschwingungsdämpfer (90) - belegt sind,
wobei
zumindest einer dieser Freiräume (152) zur Aufnahme einer Beschaufelung (156) vorgesehen ist,
wobei der Torsionsschwingungsdämpfer (90) über eine Führungsvorrichtung (150) zur Abstützung wenigstens eines Energiespeichers (142) einer Dämpfungseinrichtung (180) nach radial außen verfügt, wobei der Energiespeicher (142) über eine Mehrzahl von Windungen (158) verfügt,
**dadurch gekennzeichnet,**
**dass** dem zumindest einen, die Beschaufelung (156) aufweisenden Freiraum (152) als Antriebsteil (161) eines hydrodynamischen Zusatzkreises (160, 186) die mit dem wenigstens einen Energiespeicher (142) ausgebildete Führungsvorrichtung (150) des Torsionsschwingungsdämpfers (90) als Abtriebsteil (164) des hydrodynamischen Zusatzkreises (160) zugeordnet ist, wobei die Windungen (158) des Energiespeichers (142) für das Abtriebsteil (164) als Beschaufelung wirksam sind.

2. Hydrodynamische Kopplungsanordnung nach Anspruch 1,
**dadurch gekennzeichnet,**
**dass** die Führungsvorrichtung (150) des Torsionsschwingungsdämpfers (90) zur Gewährleistung ihrer Funktion als Abtriebsteil (164) des hydrodynamischen Zusatzkreises (160, 186) über zumindest eine Führungsschale (144) für den wenigstens einen Energiespeicher (142) verfügt, wobei die Führungsschale (144) an Ihrer dem Antriebsteil (161) des hydrodynamischen Zusatzkreises (160) zugewandten Seite zumindest im wesentlichen mit einer Öffnung (154) zum Austausch fluidförmigen Mediums mit dem Antriebsteil (161) versehen ist.

3. Hydrodynamische Kopplungsanordnung nach Anspruch 2 mit einem ersten Freiraum (152), der in einem Abschnitt des Kupplungsgehäuses (5) zwischen der Überbrückungskupplung (56) und dem Torsionsschwingungsdämpfer (90) an der der Überbrückungskupplung (56) zugewandten Seite des Torsionsschwingungsdämpfers (90) vorgesehen ist,
**dadurch gekennzeichnet,**
**dass** die Beschaufelung (156) dieses ersten Freiraumes (152) an dem Kupplungsgehäuse (5) vorgesehen und zumindest in Richtung zum Torsionsschwingungsdämpfer (90) mit einer Ausnehmung (159) versehen ist, während die Führungsschale (144) der Führungsvorrichtung (150) die Öffnung (154) an der der Überbrückungskupplung (56) zugewandten Seite aufweist.

4. Hydrodynamische Kopplungsanordnung nach einem der Ansprüche 1 bis 3,
**dadurch gekennzeichnet,**
**dass** der erste Freiraum (152) fluidförmiges Medium über die Überbrückungskupplung (56) und/oder aus dem hydrodynamischen Kreis (24) aufnimmt.

## Claims

1. Hydrodynamic coupling arrangement, with a clutch housing (5) which is rotatable about an axis of rotation (3) and inside which is provided at least one hydrodynamic circuit (24) which is formed by at least one pump wheel (17) and one turbine wheel (19) and which is assigned a lock-up clutch (56) and a torsional vibration damper (90), the clutch housing (5) comprising, preferably in the radially outer region, free spaces (152) which are occupied by none of the abovementioned components - pump wheel (17), turbine wheel (19), lock-up clutch (56) or torsional vibration damper (90), at least one of these free spaces (152) being provided for the reception of blading (156), the torsional vibration damper (90) having a guide device (150) for supporting at least one energy accumulator (142) of a damping device (180) radially outwards, the energy accumulator (142) having a plurality of turns (158), **characterized in that** the at least one free space (152) having the blading (156), as the drive part (161) of a hydrodynamic additional circuit (160, 186), is assigned the guide device (150), formed together with the at least one energy accumulator (142), of the torsional vibration damper (90), as the driven part (164) of the hydrodynamic additional circuit (160), the turns (158) of the energy accumulator (142) for the driven part (164) being active as blading.

2. Hydrodynamic coupling arrangement according to Claim 1, **characterized in that** the guide device (150) of the torsional vibration damper (90) has, in order to ensure its function as the driven part (164) of the hydrodynamic additional circuit (160, 186), at least one guide shell (144) for the at least one energy accumulator (142), the guide shell (144) being provided, on its side facing the drive part (161) of the hydrodynamic additional circuit (160), at least essentially with an orifice (154) for the exchange of fluidic medium with the drive part (161).

3. Hydrodynamic coupling arrangement according to Claim 2, with a first free space (152) which is provided in a portion of the clutch housing (5) between the lock-up clutch (56) and the torsional vibration damper (90), on that side of the torsional vibration damper (90) which faces the lock-up clutch (56), **characterized in that** the blading (156) of this first free space (152) is provided on the clutch housing (5) and, at least in the direction of the torsional vibration damper (90), is provided with a recess (159), while the guide shell (144) of the guide device (150) has the orifice (154) on the side facing the lock-up clutch (56).

4. Hydrodynamic coupling arrangement according to one of Claims 1 to 3, **characterized in that** the first free space (152) receives fluidic medium via the lock-up clutch (56) and/or from the hydrodynamic circuit (24).

## Revendications

1. Agencement d'accouplement hydrodynamique comprenant un boîtier d'embrayage (5) pouvant tourner autour d'un axe de rotation (3), à l'intérieur duquel est prévu au moins un circuit hydrodynamique (24) formé par au moins une roue de pompe (17) et une roue de turbine (19), auquel est associé un embrayage de pontage (56) ainsi qu'un amortisseur d'oscillations de torsion (90), le boîtier d'embrayage (5) comprenant de préférence dans la région radialement extérieure des espaces libres (152) qui ne sont occupés par aucun des composants précités - roue de pompe (17), roue de turbine (19), embrayage de pontage (56) ou amortisseur d'oscillations de torsion (90) - au moins l'un de ces espaces libres (152) étant prévu pour recevoir un aubage (156),
l'amortisseur d'oscillations de torsion (90) disposant, radialement vers l'extérieur, d'un dispositif de guidage (150) pour supporter au moins un accumulateur d'énergie (142) d'un dispositif d'amortissement (180), l'accumulateur d'énergie (142) disposant d'une pluralité d'enroulements (158),
**caractérisé en ce que**
à l'au moins un espace libre (152) présentant l'aubage (156), en tant que partie d'entraînement (161) d'un circuit hydrodynamique auxiliaire (160, 186), est associé le dispositif de guidage (150) réalisé avec l'au moins un accumulateur d'énergie (142) de l'amortisseur d'oscillations de torsion (90) en tant que partie de prise de force (164) du circuit hydrodynamique auxiliaire (160), les enroulements (158) de l'accumulateur d'énergie (142) pour la partie de prise de force (164) agissant en tant qu'aubage.

2. Agencement d'accouplement hydrodynamique selon la revendication 1,
**caractérisé en ce que**
le dispositif de guidage (150) de l'amortisseur d'oscillations de torsion (90), pour garantir son fonctionnement en tant que partie de prise de force (164) du circuit hydrodynamique auxiliaire (160, 186), dispose d'au moins une coque de guidage (144) pour l'au moins un accumulateur d'énergie (142), la coque de guidage (144) étant pourvue sur son côté tourné vers la partie d'entraînement (161) du circuit hydrodynamique auxiliaire (160) au moins essentiellement d'une ouverture (154) pour l'échange de milieu formant un fluide avec la partie d'entraînement (161).

3. Agencement d'accouplement hydrodynamique selon la revendication 2, comprenant un premier espace libre (152), qui est prévu dans une portion du boîtier d'embrayage (5) entre l'embrayage de pontage (56) et l'amortisseur d'oscillations de torsion (90) du côté de l'amortisseur d'oscillations de torsion (90) tourné vers l'embrayage de pontage (56),
**caractérisé en ce que**
l'aubage (156) de ce premier espace libre (152) est prévu sur le boîtier d'embrayage (5) et est pourvu, au moins dans la direction de l'amortisseur d'oscillations de torsion (90), d'un évidement (159), tandis que la coque de guidage (144) du dispositif de guidage (150) présente l'ouverture sur le côté tourné vers l'embrayage de pontage (56).

4. Agencement d'accouplement hydrodynamique selon l'une quelconque des revendications 1 à 3,
**caractérisé en ce que**
le premier espace libre (152) reçoit un milieu formant un fluide par le biais de l'embrayage de pontage (56) et/ou depuis le circuit hydrodynamique (24).
